# EUROPEAN PATENT APPLICATION

(11) **EP 2 796 977 A1**
(43) Date of publication of application: **29.10.2014**
(21) Application number: 13165111.9
(22) Date of filing: 24.04.2013
(51) Int. Cl.: G06F 3/0488, G06F 3/039

(54) **A method for interfacing between a device and information carrier with transparent area(s)**

(71) Applicant: Cartamundi Turnhout N.V., 2300 Turnhout (BE)
(72) Inventor: Nietvelt, Steven Karel Maria, 2300 Turnhout (BE)
(74) Representative: Plas, Axel Ivo Michel

(57) **Abstract**

A method for interfacing with a device (110; 210) having a touch sensitive display (111; 211), comprising:
- detecting presence of an information carrier (101; 201) in overlay of the display (111; 211), the information carrier (101; 201) having at least one transparent area (102; 202);
- determining the location of the information carrier (101; 201) on the display (111; 211); and
- modifying at least one portion of an image (112A, 112B; 212B, 213B) displayed in a surface portion of the display (111; 211) being covered by the at least one transparent area (102; 202) of the information carrier (101; 201).

## Description

### Field of the Invention

The present invention generally relates to interaction between a device with display and an information carrier, e.g. a paper, cardboard or plastic card whereon information like text and images are printed. The invention in particular concerns augmented virtual interaction between such a device with display and an information carrier that has transparent portions that allow to view corresponding portions of the device's display while being covered by the information carrier. The invention also envisages augmented virtual interaction between such a device and such an information carrier while the information carrier is being moved over the device's display.

### Background of the Invention

Various methods and systems enabling interaction or virtual interaction between an object, e.g. a finger, stylus or card, have been described in literature.

United States Patent US 8,381,135 entitled "Proximity Detector in Handheld Device" for instance describes detection of an object, e.g. a finger or stylus, in proximity of a touchscreen, and enlarging a portion of the graphical user interface (GUI) near the sensed object or displaying a GUI element near the sensed object. Specific embodiments that are described in US 8,381,135 entail displaying a virtual control element, e.g. a virtual scroll wheel as shown in Fig. 17B of US 8,381,135 or a virtual keyboard as shown in Fig. 17J of US 8,381,135, or locally magnifying/enlarging the displayed content as is illustrated by Fig. 19A/Fig. 19B of US 8,381,135.

US 8,381,135 however does not teach interaction or virtual interaction between a display and an information carrier, e.g. a card. It mainly relies on user input, i.e. a human being touching the display with his finger or a stylus. US 8,381,135 does not suggest to detect the presence of information carriers that have transparent portions and it does not rely on the presence of such transparent portions to select which part(s) of the displayed image will be modified.

United States Patent Application US 2011/0201427 entitled "Electronic Game with Overlay Card" discloses interaction between a game console having a touchscreen and a card. The card contains a pattern that guides the user to perform gestures, e.g. with a stylus, that interact with the touchscreen. As a result of the interaction with the user, the card shall be detected and identified, and responsive action affecting the game shall be taken. The responsive action may for instance include modifying a portion of the game displayed on the touchscreen.

In US 2011/0201427, there is no interaction with the card or information carrier only. User input, e.g. a user following a specific pattern with a stylus, remains required as a result of which detection and identification of the card remains error prone. Further, US 2011/0201427 does not track movement of the card as a result of which it remains impossible to establish virtual interaction between the GUI and a card that is moved over the display. It also remains impossible to assign virtual activity, e.g. a magnifying effect, x-ray scan effect, night vision goggle effect, ... to the card or information carrier.

It is an objective of the present invention to resolve the above-identified shortcomings of existing solutions. More particularly, it is an objective to disclose a method for augmented interaction between a display and an information carrier, wherein it is possible to assign virtual activity to transparent portions in the information carrier. It is an additional objective of the present invention to enable such augmented interaction between a display and information carrier when the information carrier is moved along the display surface.

### Summary of the Invention

According to the present invention, the above identified shortcomings of existing solutions are resolved by the method for interfacing with a device having a touch sensitive display as defined by claim 1, the method comprising:
- detecting presence of an information carrier in overlay of the display, the information carrier having at least one transparent area;
- determining the location of the information carrier on the display; and
- modifying at least one portion of an image displayed on the display, the at least one portion of the image being displayed in a surface portion of the display being covered by the at least one transparent area of the information carrier.

Thus, the present invention consists in realizing virtual interaction between a device with touch sensitive display, e.g. a desktop PC, laptop PC, a tablet PC, mini-tablet, smartphone, mobile phone, game console, media player, etc., and an information carrier with transparent part(s), e.g. a game card, loyalty card, collecting card, etc., the non-transparent part(s) of which typically are printed with information, e.g. text, images, cartoons, etc. The information carrier has one or more transparent zone in the shape of a circle, triangle, square, monocle, binocular, lens, or any arbitrary shape. First, presence of the information carrier on or near the touch sensitive display is detected. Various technologies exist for detecting the presence of an object like the information carrier with transparent zones: capacitive sensing of conductive elements that are integrated in the information carrier, reading a tag (e.g. an RFID tag) that is integrated in the information carrier, recognition of a touch pattern that is executed by the user based on instructions carried by the information carrier, etc. Thereafter, the location of the information carrier on the display is determined. The present invention in other words is aware of the location of the information carrier, e.g. a card, on the device's touchscreen. At least the display portion(s) that are covered by the transparent part(s) of the information carrier is/are then modified in order to establish virtual interaction between the display and the information carrier. Thereto, knowledge of the location of the transparent portion(s) in the information carrier must be available: this knowledge may be predefined, i.e. the computer-implemented method is aware of it because all information carriers have the same structure with transparent portion(s) at the same predefined location(s), or alternatively the location of the transparent portion(s) must be learned as will be explained in more detail below.

Optionally, as defined by claim 2, the method for interfacing with a device having a touch sensitive display according to the present invention further comprises:
- tracking the location of the information carrier when moved along the display; and
- modifying at least one portion of an image displayed on the display, the at least one portion of the image being displayed in a surface portion of the display covered instantly by the at least one transparent area of the information carrier moved along the display.

Thus, a particular embodiment of the present invention continuously tracks the location of the information carrier. Such embodiment in other words is at each point in time aware of the instant location of the information carrier. This knowledge and knowledge of the location of the transparent portion(s) in the information carrier can then be exploited in order to further augment the virtual interaction between the display and the card or information carrier. The portions of the displayed image that are modified shall follow the instant location of the transparent zone(s) of the information carrier such that the movements of the information carrier over the display determine which portion(s) of the display change instantly.

Also optionally, as defined by claim 3, the method for interfacing with a device having a touch sensitive display according to the present invention further comprises:
- identifying the information carrier; and
- determining the location of the at least one transparent area in the information carrier in response to identification of the information carrier.

Indeed, in case the information carrier is unique, e.g. different cards that each have a unique label or machine-readable code integrated, the information carrier may be identified by scanning, sensing or reading its unique label or code. From the cards identification, the location of the transparent area(s) may be derivable, e.g. through consultation of a list or database. The combined knowledge of the location of the information carrier, which is permanently tracked in accordance with the present invention, and the location of the transparent area(s) in the information carrier, allows to modify at any point in time portions of the displayed image that are covered by the transparent area(s).

Alternatively, as defined by claim 4, the method for interfacing with a device having a touch sensitive display according to the present invention may further comprise:
- identifying a type of the information carrier; and
- determining the location of the at least one transparent area in the information carrier in response to identification of the type.

Indeed, different types of cards or information carriers may be distributed in relation to a specific embodiment of the present invention. Each type of card may have the transparent portion(s) at particular fixed location(s), but these locations may be different for different types of cards. For instance a "monocle" card may have a single, circular transparent area at a predetermined location in the card, a "binocle" card may have two circular transparent areas at predetermined locations in the card, etc. Detecting the type of card, e.g. by sensing a label or code attached to or integrated in the card, may be sufficient to gain knowledge on the location of the transparent area(s) in the card. Again, the combined knowledge of the location of the information carrier, which is permanently tracked in accordance with the present invention, and the location of the transparent area(s) in the information carrier as determined by the type of card, shall allow to modify at any point in time portions of the displayed image that are covered by the transparent area(s).

Further optionally, as defined by claim 5, the method for interfacing with a device having a touch sensitive display according to the present invention may comprise:
- detecting an additional confirmation gesture on or near the touch sensitive display.

Thus, the computer-implemented method according to the present invention may detect confirmation by the user, e.g. touching with his finger, stylus or other object a particular area on the information carrier or on the display. In case the transparent area(s) in the information carrier for instance act as a virtual magnifying tool enabling to search a small or hidden item in a displayed image, the user may execute a confirming gesture when he/she has found the searched item. The computer-implemented method according to the invention can then control displaying a new image, e.g. a starting screen, a next-level screen, a score, etc.

According to a further optional aspect of the method for interfacing with a device having a touch sensitive display according to the invention, defined by claim 6, the at least one portion of an image displayed on the display and an image printed on the information carrier generate a combined image.

Indeed, preferably the modified portions of the displayed image, covered by the transparent parts of the information carrier and image(s) printed on the non-transparent parts of the information carrier jointly create a scene or effect for the user. The modified portions of the displayed image may for instance enlarge or magnify the image locally whereas the non-transparent parts of the information carrier may be printed with the housing of a binocular. The combined effect for the user would be that he/she is effectively using a binocular which will increase the augmented reality and user experience.

In an embodiment of the method for interfacing with a device having a touch sensitive display according to the invention, defined by claim 7, modifying at least one portion of an image comprises displaying information in relation to quiz questions, answers to such quiz questions and/or scores obtained by answering such quiz questions.

Thus, the present invention may be used to augment interaction during a quiz. The card or information carrier may determine the specific type of quiz that is launched. The cards location on the touchscreen shall typically remain unchanged during the quiz. The card shall be laid down on a predetermined position of the touch based display. This may be realized by a card whose dimensions fit the dimensions of the display, e.g. in case the device is a smartphone, or by displaying marks indicating the position of the card on the display, or by sensing the initial position of the card through various location determination techniques described already above. Once the position of the card on the display is known, the portions of the display behind the transparent zone(s) of the card can be used to display quiz questions, possible answers to such quiz questions, scores that are obtained by answering such quiz questions, and various items such as still images and moving images that form part of a quiz question or the possible answers to such quiz question.

In an alternate embodiment of the method for interfacing with a device having a touch sensitive display according to the invention, defined by claim 8, modifying at least one portion of an image comprises enlarging a portion of information that forms part of the image.

In this embodiment of the invention, the information carrier or more precisely the transparent portion(s) thereof become virtual magnifying glasses. In case the non-transparent parts of the information carrier are printed with the housing of a monocle or binocular, the combined printed and displayed images generate a new overall image of a monocle or binocular. This enables the user for instance to search and find, with virtual help of a card, information in a displayed image that is impossible to find or hard to find with the naked eye.

In an alternate embodiment of the method for interfacing with a device having a touch sensitive display according to the present invention, defined by claim 9, modifying at least one portion of an image comprises displaying an item that is hidden in the image.

In this embodiment, the user's card or information carrier becomes a virtual tool that unveils hidden items, e.g. an animal hidden behind leaves in a forest image, as soon as the user slides the transparent area of the card to the location in the displayed image where the item is hidden.

In yet another alternate embodiment of the method for interfacing with a device having a touch sensitive display according to the present invention, defined by claim 10, modifying at least one portion of an image comprises displaying a virtual X-ray scan of a portion of the image.

In this embodiment of the invention, the user's card or information carrier becomes a virtual X-ray camera that enables to visualize on the display portions of a human or animal skeleton by moving a transparent portion of the card to the body part that the user desires to X-ray. Obviously, various alternatives wherein instead of an X-ray filter, other types of filters may be applied to the displayed image in the zones that are covered by a transparent portion of the card.

In yet another embodiment of the method for interfacing with a device having a touch sensitive display according to the present invention, defined by claim 11, modifying at least one portion of an image comprises displaying a virtual night vision scan of a portion of the image.

Thus, a black or rather dark image displayed on the touchscreen, may be scanned using virtual night vision goggles, i.e. a card with transparent zones that locally change the image into an infrared image of the scene.

According to an optional aspect of the method for interfacing with a device having a touch sensitive display according to the present invention, as defined by claim 12, the at least one transparent area of the information carrier may be colored.

Such colored transparent portion, e.g. realized through integrating a colored transparent foil in the information carrier, may for instance enable visualizing a particular image on the display.

In addition to a method for interfacing with a device having a touch sensitive display, the present invention also relates to a corresponding data processing system as defined by claim 13, comprising means for carrying out the method according to the invention.

Further, the present invention also relates to a corresponding computer program, as defined by claim 14, comprising software code adapted to perform the method according to the invention, and to a computer readable storage medium as defined by claim 15, comprising such a computer program.

As defined by claim 16, the present invention also entails a device operable to cause a touch sensitive display to display visuals, wherein the device is operable to:
- detect presence of an information carrier in overlay of the display, the information carrier having at least one transparent area;
- determine the location of the information carrier on the display; and
- modify at least one portion of an image displayed on the display, the at least one portion of the image being displayed in a surface portion of the display being covered by the at least one transparent area of the information carrier.

In an advantageous embodiment of the device operable to cause a touch sensitive display to display visuals according to the invention, defined by claim 17, the device is further operable to:
- track the location of the information carrier when moved along the display; and
- modify at least one portion of an image displayed on the display, the at least one portion of the image being displayed in a surface portion of the display covered instantly by the at least one transparent area of the information carrier moved along the display.

### Brief Description of the Drawings

Fig. 1A illustrates an information carrier in a first embodiment of the method according to the invention;

Fig. 1B illustrates a device with touch based display in the first embodiment of the method according to the invention;

Fig. 1C illustrates the initial positioning of the information carrier on the device with touch based display in the first embodiment of the method according to the invention;

Fig. 1D illustrates moving the information carrier along the device with touch based display in the first embodiment of the method according to the invention;

Fig. 1E illustrates performing an confirmation gesture in the first embodiment of the method according to the present invention;

Fig. 2A illustrates an information carrier in a second embodiment of the method according to the invention;

Fig. 2B illustrates a device with touch based display in the second embodiment of the method according to the invention;

Fig. 2C illustrates the initial positioning of the information carrier on the device with touch based display in the second embodiment of the method according to the invention;

Fig. 2D illustrates moving the information carrier along the device with touch based display in the second embodiment of the method according to the invention; and

Fig. 2E illustrates performing a confirmation gesture in the second embodiment of the method according to the present invention.

### Detailed Description of Embodiment(s)

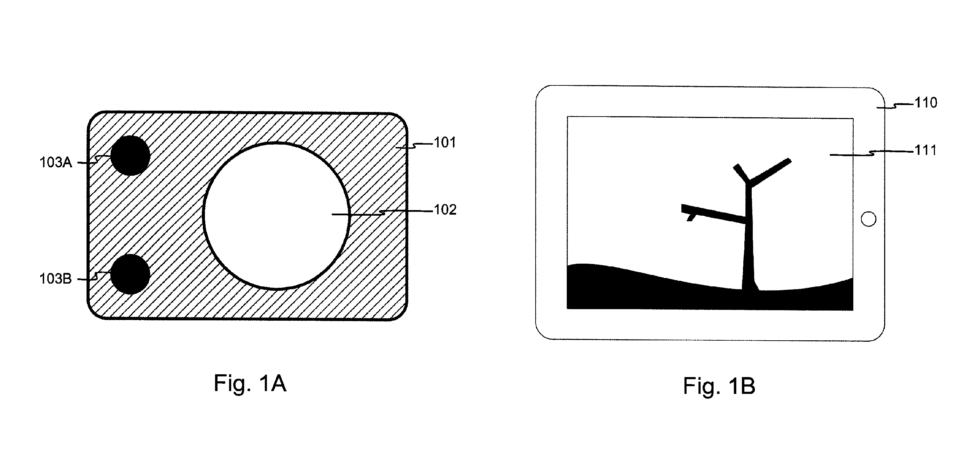

Fig. 1A shows a card 101, e.g. made out of paper, cardboard or plastic. The card 101 has a circular portion 102 that is made transparent, and two smaller circular zones 103A and 103B that are marked. The latter marked zones 103A and 103B are intended for finger touch once the card is laid on the touch screen of a device that is able to run a software application that interacts with the card 101 in accordance with the principles of the present invention.

Fig. 1B shows a device 110 with touchscreen 111, i.e. a display with capacitive layer that is responsive to touch by objects such as a finger or stylus. On the device 110, a software application is running that displays an image of a tree on display 111.

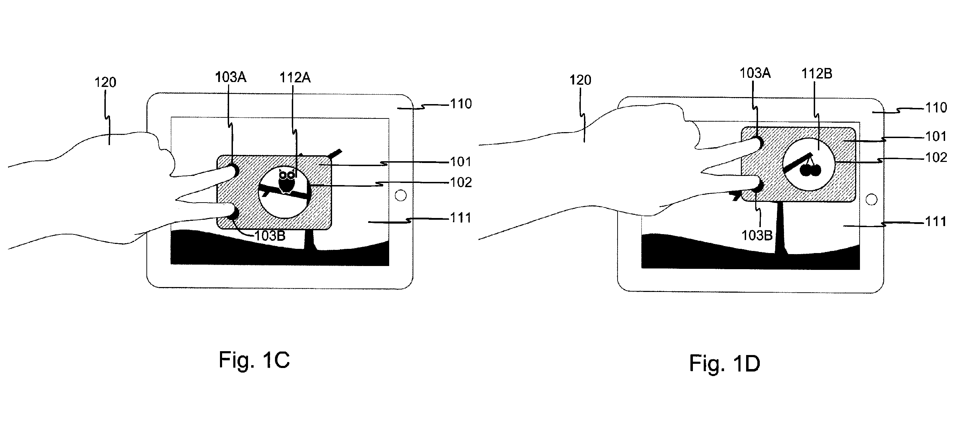

In Fig. 1C, a person has laid card 101 on touchscreen 111 of device 110. The software application running on device 110 detects the presence of card 101 and it is able to identify the card 101. To make this possible, card 101 may have a unique conductive pattern integrated or it may contain instructions for the user to execute a touch pattern that enables the device 110 with touch sensitive display under control of the software application to recognize the card 101. Once presence and identification of the card 101 is completed, the user 120 must touch the marked zones 103A and 103B with two fingers to enable the software application to determine the exact location of the card 101 on the touchscreen 111. Knowledge of the location of the card 101 and identification of the card 101 is sufficient for the software application in order to be able to determine the location of the transparent circular portion 102. On the display 111, the software application shall modify the part 112A of the image that is displayed in the circular zone 102 in order to show an element that was previously hidden. In the particular example illustrated by Fig. 1C, the software application controls the graphical user interface (GUI) of device 110 to display an image 112A of an owl sitting on the lower branch of the tree that was displayed in Fig. 1B.

In Fig. 1D, the user 120 has moved the card 101 along touchscreen 111 of device 110 to a new position. While doing so, the user 120 keeps two fingers in touch with respectively the marked zones 103A and 103B. This enables the capacitive layer of touchscreen 101 to track movement of the card 101 and in response thereto, the software application running on device 110 and controlling the images that are displayed can instantly modify the portion of the displayed image behind the transparent circular area 102. Hidden elements will be shown when the transparent circular area 102 is crossing them. In the particular example of Fig. 1D, an image 112B of two hanging cherries is shown when the transparent circular area 102 of card 101 is covering the upper branch of the tree displayed in Fig. 1B.

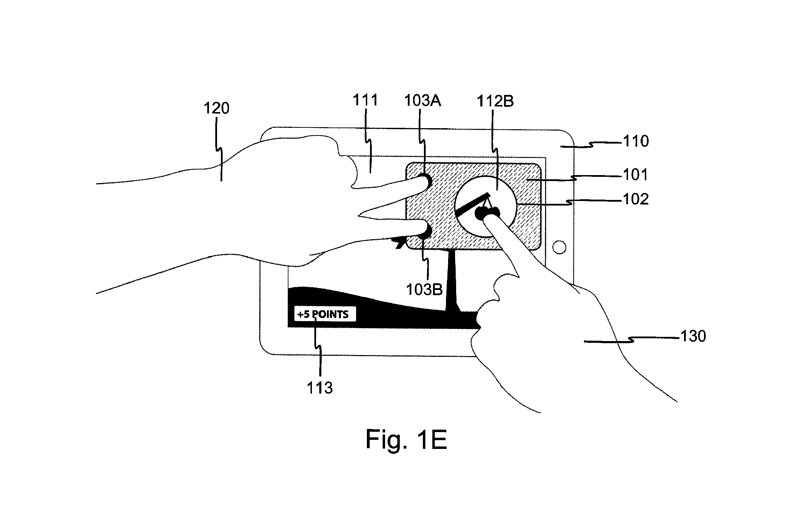

The card 101 and corresponding software application running on device 110 realize augmented interaction between the card and display. The card 101 may for instance contain instructions for the user to search cherries in a tree. The card 101 becomes a search tool for the user since its transparent portion 102 enables to unveil elements that are hidden in the original image displayed. As is illustrated by Fig. 1E, the user may confirm through an additional gesture, e.g. finger touch using his second hand 130, that the cherries are found, as a result of which points may be collected, e.g. 5 additional points as illustrated by 113 in Fig. 1E.

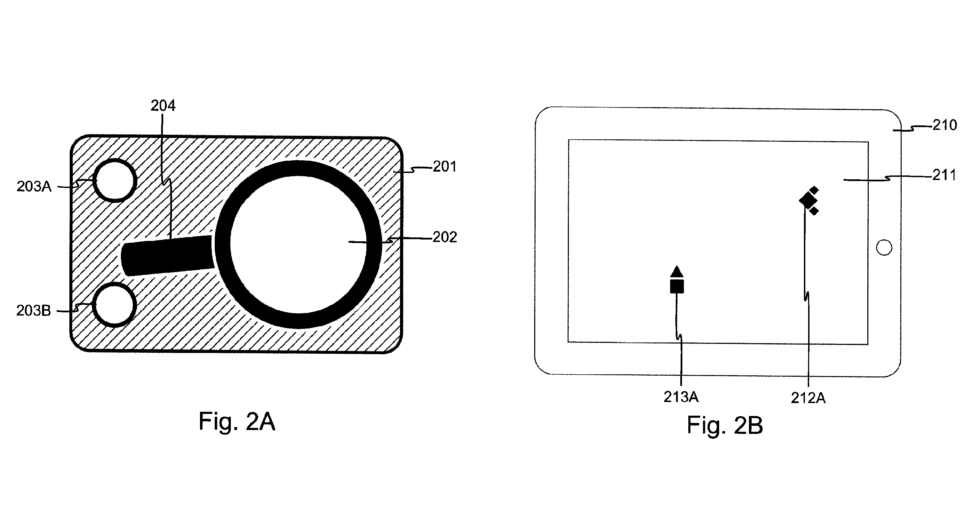

Fig. 2A shows a card 201, e.g. made out of paper, cardboard or plastic, that is used in a second embodiment of the present invention. The card 201 also has a circular portion 202 that is made transparent, and two smaller circular zones 203A and 203B that are marked. The latter marked zones 203A and 203B are again intended for finger touch once the card 201 is laid on the touchscreen of a device that is able to run a software application that interacts with the card 201 in accordance with the principles of the present invention. The card 201 further is printed with the image 204 of a magnifying glass positioned such that the transparent circular area 202 coincides with the glass of the printed magnifying glass 204.

Fig. 2B shows a device 210 with touchscreen 211, i.e. a display with capacitive layer that is responsive to touch by objects such as a finger or stylus. On the device 210, a software application is running that displays an image on display 211, the image containing a first figurine 212A and a second figurine 213A.

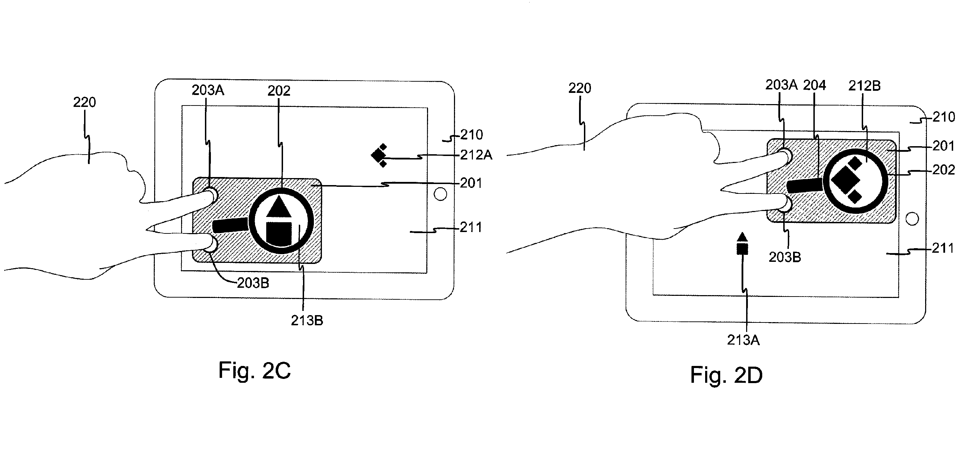

In Fig. 2C, a person has laid card 201 on touchscreen 211 of device 210. The software application running on device 210 detects the presence of card 201 and it is able to identify the card 201. To make this possible, card 201 may have a unique conductive pattern integrated or it may contain instructions for the user to execute a touch pattern that enables the device 210 with touch sensitive display under control of the software application to recognize the card 201. Once presence and identification of the card 201 is completed, the user 220 must touch the marked zones 203A and 203B with two fingers to enable the software application to determine the exact location of the card 201 on the touchscreen 211. Knowledge of the location of the card 201 and identification of the card 201 is sufficient for the software application in order to be able to determine the location of the transparent circular portion 202. On the display 211, the software application shall modify the part of the image that is displayed in the circular zone 202 in order to magnify one or more elements displayed therein. In the particular example illustrated by Fig. 2C, the software application controls the graphical user interface (GUI) of device 210 to display a magnified image 213B of the second figurine 213A that was displayed in Fig. 2B.

In Fig. 2D, the user 220 has moved the card 201 along touchscreen 211 of device 210 to a new position. While doing so, the user 220 keeps two fingers in touch with respectively the marked zones 203A and 203B. This enables the capacitive layer of touchscreen 201 to track movement of the card 201 and in response thereto, the software application running on device 210 and controlling the images that are displayed, can instantly modify the portion of the displayed image behind the transparent circular area 202. Elements in the image will be enlarged when the transparent circular area 202 is crossing them. In the particular example of Fig. 2D, a magnified image 212B of the first figurine is displayed as soon as the transparent circular area 202 of card 201 is covering the first figurine 212A shown in Fig. 2B. The printed magnifying glass 204 and the enlarged visualization of elements in portions of the display 211 that are covered by the transparent zone 202 result in a combined new image for the user, i.e. a virtual magnifying glass.

The card 201 and corresponding software application running on device 210 realize augmented interaction between the card 210 and display 211. The card 201 may for instance contain instructions for the user to search a certain figurine in a displayed image. The card 201 becomes a search tool for the user since its transparent portion 202 enables to magnify elements that are hardly visible or distinguishable in the original displayed image. As is illustrated by Fig. 2E, the user may confirm through an additional gesture, e.g. finger touch using his second hand 230, that the figurine is found, as a result of which points may be collected, e.g. 5 additional points as illustrated by 214 in Fig. 2E.

The method according to the invention shall typically be computer-implemented on a data processing system or computing device. A data processing system or computing device that is operated according to the present invention can include a workstation, a server, a laptop, a desktop, a hand-held device, a mobile device, a tablet computer, or other computing device, as would be understood by those of skill in the art.

The data processing system or computing device can include a bus or network for connectivity between several components, directly or indirectly, a memory or database, one or more processors, input/output ports, a power supply, etc. One of skill in the art will appreciate that the bus or network can include one or more busses, such as an address bus, a data bus, or any combination thereof, or can include one or more network links. One of skill in the art additionally will appreciate that, depending on the intended applications and uses of a particular embodiment, multiple of these components can be implemented by a single device. Similarly, in some instances, a single component can be implemented by multiple devices.

The data processing system or computing device can include or interact with a variety of computer-readable media. For example, computer-readable media can include Random Access Memory (RAM), Read Only Memory (ROM), Electronically Erasable Programmable Read Only Memory (EEPROM), flash memory or other memory technologies, CDROM, digital versatile disks (DVD) or other optical or holographic media, magnetic cassettes, magnetic tape, magnetic disk storage or other magnetic storage devices that can be used to encode information and can be accessed by the data processing system or computing device.

The memory can include computer-storage media in the form of volatile and/or nonvolatile memory. The memory may be removable, non-removable, or any combination thereof. Exemplary hardware devices are devices such as hard drives, solid-state memory, optical-disc drives, or the like. The data processing system or computing device can include one or more processors that read data from components such as the memory, the various I/O components, etc.

The I/O ports can allow the data processing system or computing device to be logically coupled to other devices, such as I/O components. Some of the I/O components can be built into the computing device. Examples of such I/O components include a microphone, joystick, recording device, game pad, satellite dish, scanner, printer, wireless device, networking device, or the like.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for interfacing with a device (110; 210) having a touch sensitive display (111; 211), said method comprising:
- detecting presence of an information carrier (101; 201) in overlay of said display (111; 211), said information carrier (101; 201) having at least one transparent area (102; 202);
- determining the location of said information carrier (101; 201) on said display (111; 211); and
- modifying at least one portion of an image (112A, 112B; 212B, 213B) displayed on said display (111; 211), said at least one portion of said image (112A, 112B; 212B, 213B) being displayed in a surface portion of said display (111; 211) being covered by said at least one transparent area (102; 202) of said information carrier (101; 201).

2. A method for interfacing with a device (110; 210) having a touch sensitive display (111; 211) according to claim 1, said method further comprising:
- tracking the location of said information carrier (101; 201) when moved along said display (111; 211); and
- modifying at least one portion of an image (112A, 112B; 212B, 213B) displayed on said display (111; 211), said at least one portion of said image (112A, 112B; 212B, 213B) being displayed in a surface portion of said display (111; 211) covered instantly by said at least one transparent area (102; 202) of said information carrier (101; 201) moved along said display (111; 211).

3. A method for interfacing with a device (110; 210) having a touch sensitive display (111; 211) according to claim 1 or claim 2, said method further comprising:
- identifying said information carrier (101; 201); and
- determining the location of said at least one transparent area (102; 202) in said information carrier (101; 201) in response to identification of said information carrier (101; 2201).

4. A method for interfacing with a device (110; 210) having a touch sensitive display 2(111; 211) according to claim 1 or claim 2, said method further comprising:
- identifying a type of said information carrier (101; 201); and
- determining the location of said at least one transparent area (102; 202) in said information carrier (101; 201) in response to identification of said type.

5. A method for interfacing with a device (110; 210) having a touch sensitive display (111; 211) according to claim 1 or claim 2, said method further comprising:
- detecting an additional confirmation gesture (130; 230) on or near said touch sensitive display (111; 211).

6. A method for interfacing with a device (210) having a touch sensitive display (211) according to claim 1 or claim 2,
wherein said at least one portion of an image (212B, 213B) displayed on said display (211) and an image (204) printed on said information carrier (201) generate a combined image.

7. A method for interfacing with a device having a touch sensitive display according to claim 1,
wherein modifying at least one portion of an image comprises displaying information in relation to quiz questions, answers to such quiz questions and/or scores obtained by answering such quiz questions.

8. A method for interfacing with a device (210) having a touch sensitive display (211) according to claim 1 or claim 2,
wherein modifying at least one portion of an image (212B, 213B) comprises enlarging a portion of information (212A, 213A) that forms part of said image.

9. A method for interfacing with a device (110) having a touch sensitive display (111) according to claim 1 or claim 2,
wherein modifying at least one portion of an image (112A, 112B) comprises displaying an item that is hidden in said image.

10. A method for interfacing with a device having a touch sensitive display according to claim 1 or claim 2,
wherein modifying at least one portion of an image comprises displaying a virtual X-ray scan of a portion of said image.

11. A method for interfacing with a device having a touch sensitive display according to claim 1 or claim 2,
wherein modifying at least one portion of an image comprises displaying a virtual night vision scan of a portion of said image.

12. A method for interfacing with a device having a touch sensitive display according to claim 1 or claim 2,
wherein said at least one transparent area (102; 202) of said information carrier (101; 201) is colored.

13. A data processing system comprising means for carrying out the method of any of claims 1 to 12.

14. A computer program comprising software code adapted to perform the method of any of claims 1 to 12.

15. A computer readable storage medium comprising the computer program of claim 14.

16. A device operable to cause a touch sensitive display (111; 211) to display visuals, wherein said device is operable to:
- detect presence of an information carrier (101; 201) in overlay of said display (110; 210), said information carrier (101; 201) having at least one transparent area (102; 202);
- determine the location of said information carrier (101; 201) on said display (111; 211); and
- modify at least one portion of an image (112A, 112B; 212B, 213B) displayed on said display (111; 211), said at least one portion of said image (112A, 112B; 212B, 213B) being displayed in a surface portion of said display (111; 211) being covered by said at least one transparent area (102; 202) of said information carrier (101; 201).

17. A device operable to cause a touch sensitive display (111; 211) to display visuals as defined by claim 16, wherein said device is further operable to:
- track the location of said information carrier (101; 201) when moved along said display (111; 211); and
- modify at least one portion of an image (112A, 112B; 212B, 213B) displayed on said display (111; 211), said at least one portion of said image (112A, 112B; 212B, 213B) being displayed in a surface portion of said display (111; 211) covered instantly by said at least one transparent area (102; 202) of said information carrier (101; 201) moved along said display (111; 211).
